# EUROPEAN PATENT SPECIFICATION

(11) **EP 0 780 235 B1**
(45) Date of publication and mention of the grant of the patent: **17.04.2002**
(21) Application number: 96402847.6
(22) Date of filing: 20.12.1996
(51) Int. Cl.: B41J 2/21

(54) **Printer apparatus**
Druckgerät
Appareil d'impression

(30) Priority: 20.12.1995 JP 33213995
(43) Date of publication of application: 25.06.1997
(73) Proprietor: SONY CORPORATION, Tokyo (JP)
(72) Inventor: Narushima, Toshio c/o Sony Corporation, Tokyo (JP)
(74) Representative: Thévenet, Jean-Bruno

(56) References cited:
- EP-A- 0 633 136
- DE-A- 4 123 221
- DE-A- 19 509 537
- US-A- 4 494 128
- US-A- 4 675 696
- PATENT ABSTRACTS OF JAPAN vol. 016, no. 087 (M-1217), 3 March 1992 & JP 03 268967 A (NEC CORP), 29 November 1991,
- PATENT ABSTRACTS OF JAPAN vol. 007, no. 120 (M-217), 25 May 1983 & JP 58 038189 A (TOMOEGAWA SEISHIJIYO:KK), 5 March 1983,

## Description

### BACKGROUND OF THE INVENTION

### Field of the Invention

The present invention relates to an ink jet printer for applying ink to a recording medium to print information thereon, and more particularly to a printer apparatus which is designed to prevent unwanted ink from being expelled from the printer apparatus toward a recording medium.

### Description of the Prior Art

So-called ink-on-demand jet printers for expelling ink droplets depending on information to be printed and applying the expelled ink droplets to a recording medium such as a sheet of paper or film for thereby printing the information thereon have quickly been in widespread use because they can be reduced in size and cost.

Figs. 1A through 1C of the accompanying drawings show conventional ink jet print heads (hereinafter referred to simply as "print heads") for use in such ink-on-demand jet printers. The illustrated conventional print heads employ an electrostrictive device such as a piezoelectric device for expelling ink droplets.

The print head shown in Fig. 1A employs a cylindrical electrostrictive device. Specifically, the print head comprises a tube 511 of glass or the like and a cylindrical electrostrictive device 512 disposed around the tube 511. The tube 511 has an ink supply port 514 defined in an end thereof for supplying ink to an ink chamber 513 defined in the tube 511, and a nozzle 516 and an orifice 517 which are defined in an opposite end thereof for expelling the ink stored in the ink chamber 513 as ink droplets 515.

When a predetermined voltage from a voltage generator 518 is applied to the electrostrictive device 512, the electrostrictive device 512 is elastically deformed to change the volume of the ink chamber 513. The change in the volume of the ink chamber 513 increases the internal pressure in the ink chamber 513 to expel ink droplets 515 out of the ink chamber 513 through the orifice 517 and the nozzle 516.

Therefore, if the voltage generator 518 is energized based on information to be printed, the ink droplets 515 are expelled from the nozzle 516 at a rate depending on the information to be printed. The expelled ink droplets 515 are applied to a recording medium (not shown) such as a sheet of paper or film to print the information thereon.

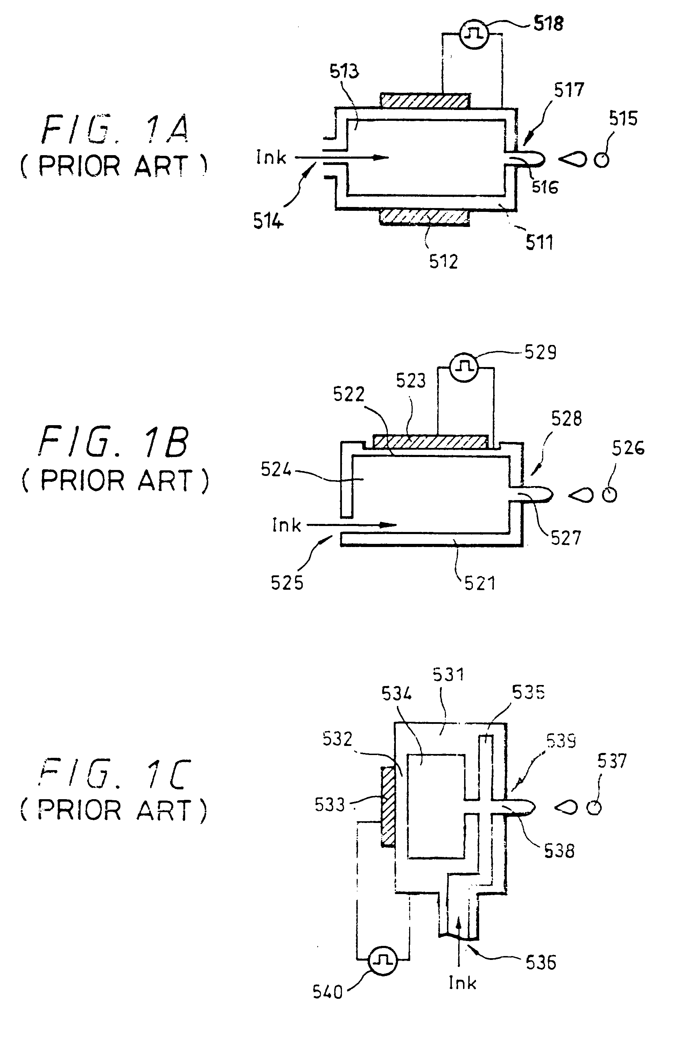

The print head shown in Fig. 1B employs a planar electrostrictive device. Specifically, the print head comprises a casing 521 of an arbitrary material which has a vibratory plate 522 as one side wall and an electrostrictive device 523 bonded to the vibratory plate 522, thus making up a so-called bimorph plate. The casing 512 has an ink supply port 525 defined in an end thereof for supplying ink to an ink chamber 524 defined in the casing 521, and a nozzle 527 and an orifice 528 which are defined in an opposite end thereof for expelling the ink stored in the ink chamber 524 as ink droplets 526.

When a predetermined voltage from a voltage generator 529 is applied to the electrostrictive device 523, the electrostrictive device 523 is elastically deformed to change the volume of the ink chamber 524. The change in the volume of the ink chamber 524 increases the internal pressure in the ink chamber 524 to expel ink droplets 526 out of the ink chamber 524 through the orifice 528 and the nozzle 527.

Therefore, if the voltage generator 529 is energized based on information to be printed, the ink droplets 526 are expelled from the nozzle 527 at a rate depending on the information to be printed. The expelled ink droplets 526 are applied to a recording medium (not shown) such as a sheet of paper or film to print the information thereon.

The print head shown in Fig. 1C is of the dual-chamber type having an ink chamber and a pressure chamber. Specifically, the print head comprises a casing 531 of an arbitrary material which has a vibratory plate 532 as one side wall and an electrostrictive device 533 bonded to the vibratory plate 532, thus making up a so-called bimorph plate. The casing 532 has a pressure chamber 534 defined therein and an ink chamber or passage 535 defined therein and joined to the pressure chamber 534.

The casing 531 also has an ink supply port 536 defined in a side thereof for supplying ink to the ink passage 535, and a nozzle 538 and an orifice 539 which are defined in an end thereof opposite to the junction between the pressure chamber 534 and the ink passage 535, for expelling the ink stored in the ink passage 535 as ink droplets 537.

When a predetermined voltage from a voltage generator 540 is applied to the electrostrictive device 533, the electrostrictive device 533 is elastically deformed to change the volume of the pressure chamber 534. The change in the volume of the pressure chamber 534 increases the internal pressure in the pressure chamber 534, and the pressure buildup is transmitted from the pressure chamber 534 to the ink passage 535 to expel ink droplets 537 out of the ink passage 535 through the orifice 539 and the nozzle 538.

Therefore, if the voltage generator 540 is energized based on information to be printed, the ink droplets 537 are expelled from the nozzle 538 at a rate depending on the information to be printed. The expelled ink droplets 537 are applied to a recording medium (not shown) such as a sheet of paper or film to print the information thereon.

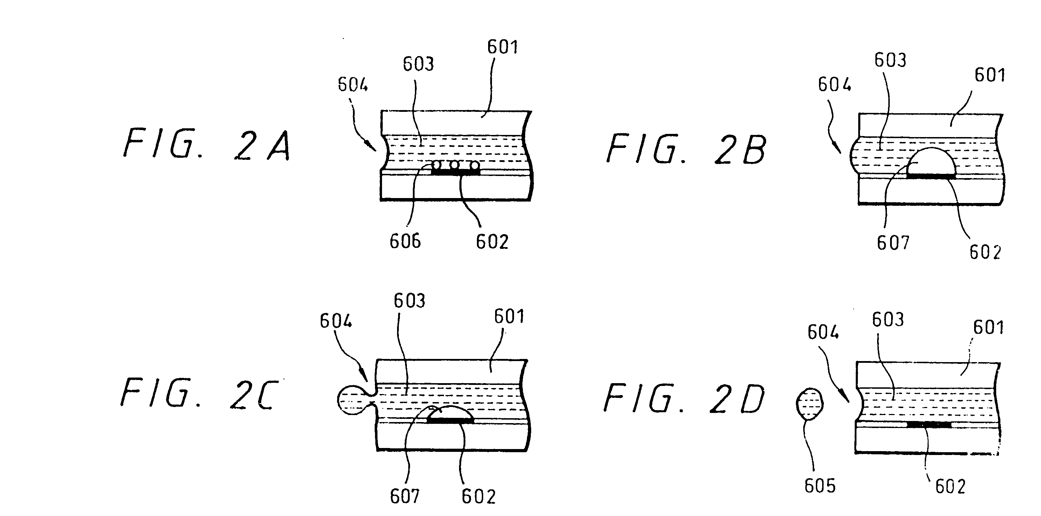

Figs. 2A through 2D of the accompanying drawings show another conventional print head for use in ink-on-demand jet printers. The illustrated conventional print head employs a heating device for expelling ink droplets.

As shown in Figs. 2A through 2D, the print head has a heating device 602 disposed in a nozzle 601. When the heating device 602 is energized, it instantaneously vaporizes ink 603 in the nozzle 601 to produce a bubble for expelling ink droplets 605 from a nozzle end 604 under the pressure of the bubble.

Specifically, as shown in Fig. 2A, when the heating device 602 is energized, the ink 603 held in contact with the heating device 602 is heated and boiled to produce a plurality of small bubbles 606. The produced small bubbles 606 are then combined into a large bubble 607 as shown in Fig. 2B. The ink 603 in the nozzle 601 is then pushed from the nozzle end 604 under the pressure of the bubble 607.

When the heating device 602 is de-energized, the bubble 607 is quickly contracted, reducing the pressure in the nozzle 601, as shown in Fig. 2C. The ink 603 pushed from the nozzle end 604 is separated from the ink 603 within the nozzle 601, and expelled as an ink droplet 605 from the nozzle end 604 as shown in Fig. 2D.

If the heating device 602 is energized based on information to be printed, ink droplets 605 are expelled from the nozzle 601 at a rate depending on the information to be printed. The expelled ink droplets 605 are applied to a recording medium (not shown) such as a sheet of paper or film to print the information thereon.

For printing color information with the above ink-on-demand ink jet printer, as many print heads as provided as the number of different coloured inks which are used. These print heads are supplied to the respective inks, and as many items of color information as the number of colors are applied to successively print the items of color information on a recording medium.

The items of color information are required to be supplied to the print heads in successive slots of time that are shifted according to distances by which the print heads are spaced. One conventional means for smoothly shifting such successive slots of time has been proposed in JP-A-58-195 365, for example.

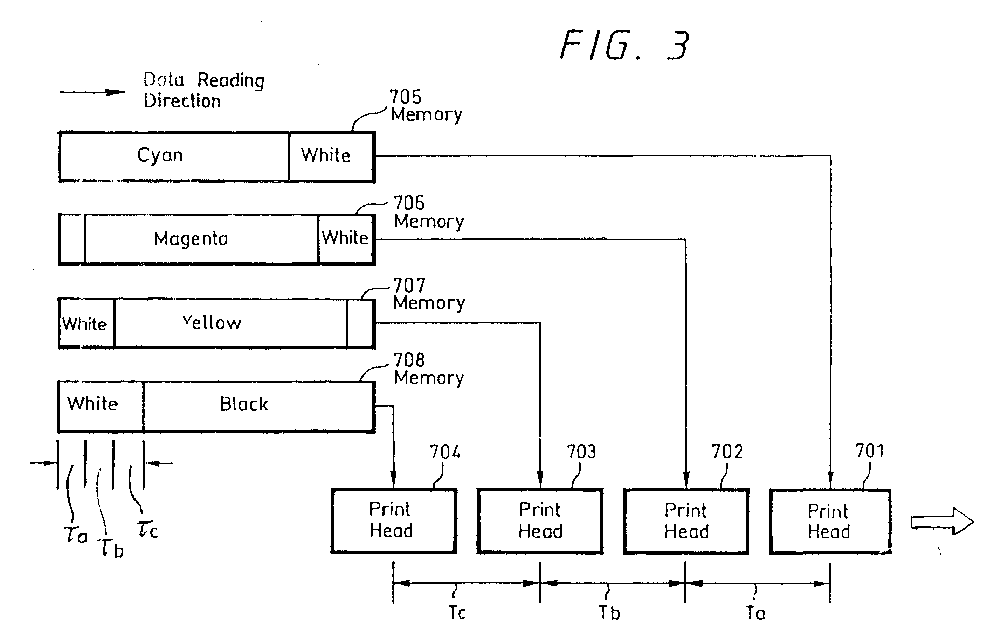

As shown in Fig. 3 of the accompanying drawings, the proposed means has memories 705, 706, 707, 708 associated with respective print heads 701, 702, 703, 704 for printing respective items of information in respective colors of cyan, magenta, yellow, and black. The memories 705, 706, 707, 708 have addresses corresponding to periods for which all the print heads 701, 702, 703, 704 make respective scanning cycles.

Items of information to be supplied to the respective print heads 701, 702, 703, 704, i.e., items of image information in respective colors of cyan, magenta, yellow, and black, are written in the respective memories 705, 706, 707, 708 at their addresses that are shifted by intervals Ta, Tb, Tc corresponding to time intervals at which the items of image information are supplied and which correspond to respective distances Ta, Tb, Tc by which the print heads 701, 702, 703, 704 are spaced.

In synchronism with the scanning of the print heads 701, 702, 703, 704, the memories 705, 706, 707, 708 are simultaneously accessed and the stored items of information are read from the same addresses of the memories 705, 706, 707, 708. The memories 705, 706, 707, 708 now output the respective stored items of information shifted by the above time intervals which correspond to the respective distances Ta, Tb, Tc, and supply these items of information to the respective print heads 701, 702, 703, 704. The print heads 701, 702, 703, 704 then print the supplied items of information in the respective colors successively at different time intervals on a recording medium.

According to the proposed arrangement, however, it is necessary to store blank information in those memory addresses other than the addresses at which the items of information to be printed are stored. If such blank information were not stored in those memory addresses, then ink would be expelled from the print heads at marginal edges of the recording medium where no information should be printed or at positions where no recording medium is present. As a result, ink would be applied to marginal edges of the recording medium or a platen for supplying the recording medium would be smeared by ink.

To avoid the above drawbacks, it has been customary to store blank information at those memory addresses or delete any memory means corresponding to those memory addresses to prevent unwanted information from being written into or read from those memory addresses. However, if a range of information to be printed is changed, then it may be necessary to store newly blank information at other memory addresses. Such a change in a range of information to be printed cannot be handled when memory means corresponding to memory addresses that would be required by such a change have been deleted.

The above blank information is stored at the memory addresses by a central processing unit (CPU) of the ink-on-demand ink jet printer. Therefore, the central processing unit needs an additional processing time to store the blank information, and suffers an additional burden for storing the blank information.

Document DE-A1-4123221 discloses a thermal printer apparatus comprising a plurality of sections each comprising a plurality of heating means. Control means and memory means are used to control the individual heating means during a printing cycle.

Document JP-A-03268967 discloses a control circuit for a dot matrix printer.

### SUMMARY OF THE INVENTION

It is an object of the present invention to provide a printer apparatus which is easily capable of changing a range of information to be printed by print heads.

Another object of the present invention is to provide a printer apparatus which can prevent print heads from discharging unwanted ink.

Still another object of the present invention is to provide a printer apparatus which allows print positions to be easily corrected regardless of mechanical positional errors of print heads.

According to the present invention, there is provided a printer apparatus comprising print head means including a plurality of print heads for printing print information, said print heads comprising means for expelling inks of different colors, respectively, to print the print information in the colors; memory means including a plurality of memories associated with said print heads, respectively, for storing print information corresponding to at least one scanning cycle of said print head means; characterized in that it further comprises signal generating means including a plurality of signal generating means associated with said print heads respectively, for generating respective enable signals indicative of an enable period of the print heads within one scanning period of said print heads and control means for accessing said memory means to read the stored print information from said memory means for a scanning cycle of said print head means, and actuating said print head means to print the print information in response to an enable signal generated by said signal generating means.

Each of the print heads may comprises a two-liquid-mixing print head for printing the information with a mixture of a diluent and an ink, one of which is metered according to the print information and mixed with a predetermined quantity of the other, and the control means may comprise means for actuating each of the two-liquid-mixing print heads in response to the enable signal.

The generating means may comprise a counter for counting access pulses supplied to access the memory means, a register for storing settings for print start and end positions of the print information, comparators for comparing the settings for print start and end positions of the print information with an output signal from the counter, and means for generating the enable signals based on output signals from the comparators.

### BRIEF DESCRIPTION OF THE DRAWINGS

Figs. 1A through 1C are schematic views of conventional ink jet print heads;
Figs. 2A through 2D are schematic views of another conventional ink jet print head;
Fig. 3 is a block diagram illustrative of the manner in which a conventional color printer apparatus operates;
Fig. 4 is a block diagram of a printer apparatus according to the present invention;
Fig. 5 is a block diagram illustrative of the manner in which the printer apparatus shown in Fig. 4 operates;
Figs. 6A and 6B are a cross-sectional view and an enlarged fragmentary cross-sectional view, respectively, of a proposed print head;
Figs. 7A and 7B are waveform diagrams illustrative of operation of the print head shown in Figs. 6A and 6B;
Figs. 8A and 8B are block diagrams showing generating means for generating an enable signal;
Fig. 9 is a perspective view of print heads of the printer apparatus;
Fig. 10 is a perspective view illustrating memories associated with the respective print heads;
Fig. 11 is a flowchart of an operation sequence of a host computer for the printer apparatus;
Fig. 12 is a flowchart of an operation sequence for transmitting one page of print information, for example, in the operation sequence shown in Fig. 11;
Figs. 13A and 13B are diagrams showing an example of one page of print information and an enable signal for printing the print information;
Fig. 14 is a flowchart of an operation sequence of the printer apparatus to print desired information;
Fig. 15 is a perspective view of a mechanism of the printer apparatus;
Fig. 16 is a diagram of a test chart which is used in the operation sequence shown in Fig. 14; and
Figs. 17A through 17C are diagrams of pixel signals, an enable signal, and drive signals applied to the print heads.

### DETAILED DESCRIPTION OF THE PREFERRED EMBODIMENT

According to the present invention, a printer apparatus has memories for storing print information corresponding to at least one scanning cycle of print heads, and generating means for generating enable signals indicative of enable periods of the print heads. In synchronism with the scanning of the print heads, the memories are accessed to read the stored print information, and the print heads are actuated by enable signals that are generated by the generating means in response to the accessing of the memories.

The inventors have proposed a novel print head, referred to as a carrier-jet print head or two-liquid-mixing print head, for printing information of intermediate gradations with a mixture of a diluent and an ink, one of which is metered according to print information and mixed with a predetermined quantity of the other, as disclosed in Japanese patent application No. 7-254250 filed September 29, 1995.

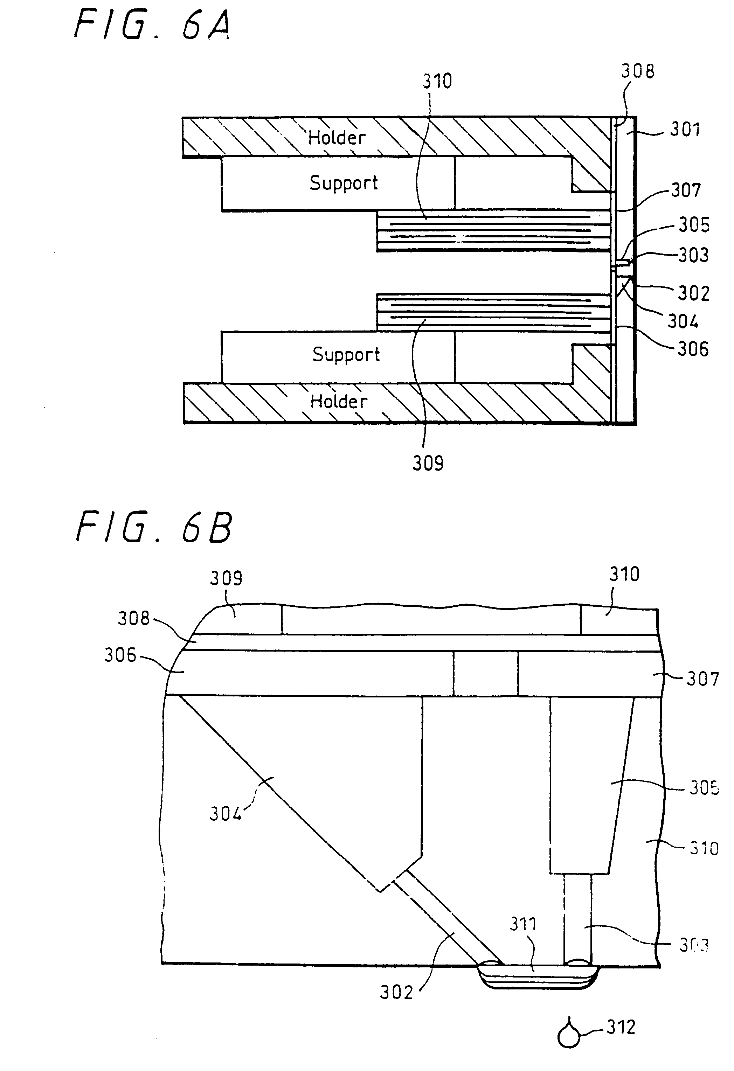

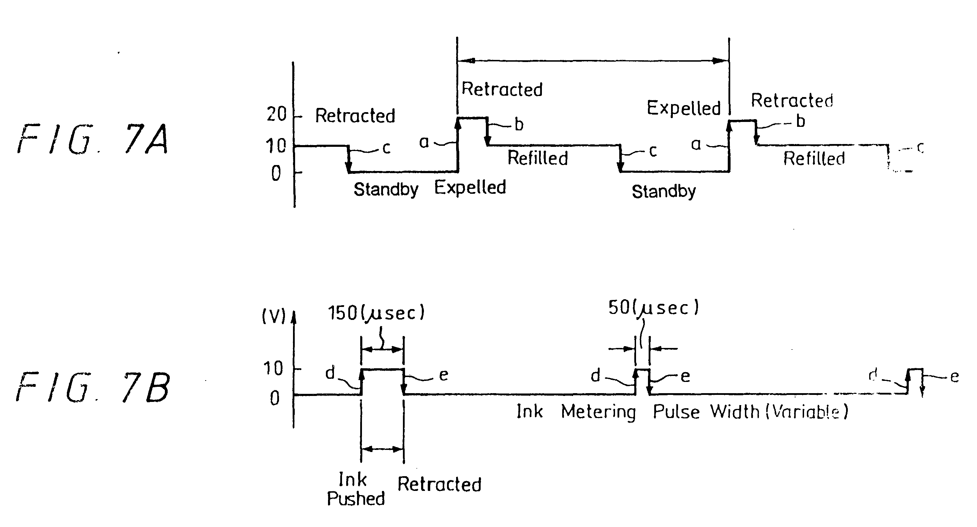

Figs. 6A and 6B show the proposed print head, and Figs. 7A and 7B show waveforms of operation of the proposed print head. As shown in Figs. 6A and 6B, the print head comprises an orifice plate 301 having a metering nozzle 302 and an expelling nozzle 303 which are defined therein and also an ink inlet hole 304 and a diluent inlet hole 305 which are defined therein in communication with the metering nozzle 302 and the expelling nozzle 303, respectively.

The print head also has a metering cavity 306 and an expelling cavity 307 which are defined behind and in communication with the ink inlet hole 304 and the diluent inlet hole 305 remotely from the metering nozzle 302 and the expelling nozzle 303, respectively. A vibratory plate 308 is disposed on one side of the metering cavity 306 and the expelling cavity 307 remotely from the ink inlet hole 304 and the diluent inlet hole 305, respectively. The vibratory plate 308 can be actuated by a metering electrostrictive device 309 and an expelling electrostrictive device 310 which are supplied with respective drive signals shown in Figs. 7A and 7B.

Fig. 7A shows the drive signal supplied to the expelling electrostrictive device 310. According to the drive signal shown in Fig. 7A, the expelling electrostrictive device 310 is displaced to a large extent at times "a" to expel a diluent filled in the diluent inlet hole 305 from the expelling nozzle 303. At times "b" and "c", the expelling electrostrictive device 310 is retracted to refill the diluent inlet hole 305 with the diluent supplied from the expelling cavity 307.

Fig. 7B shows the drive signal supplied to the metering electrostrictive device 309. According to the drive signal shown in Fig. 7B, in periods from times "d" to times "e", an ink is pushed from the metering nozzle 302 into an area in front of the expelling nozzle 303. When the diluent is expelled as a droplet 312 from the expelling nozzle 303, the droplet 312 contains an amount of mixed ink commensurate with the thickness of an ink layer 311 in the area in front of the expelling nozzle 303.

The diluent is expelled at the times "a" in time intervals of 1 millisecond, for example. At the times "a", a potential change ranging from 0 to 20 V, for example, is applied to the expelling electrostrictive device 310 to displace the expelling electrostrictive device 310 for thereby expelling the diluent. At the times "d", a potential change ranging from 0 to 10 V, for example, is applied to the metering electrostrictive device 309 to displace the metering electrostrictive device 309. The displacement of the metering electrostrictive device 309 under the potential change ranging from 0 to 10 V is not large enough to expel the ink off the metering nozzle 302, but is effective only to push the ink from the metering nozzle 302.

The amount of ink pushed from the metering nozzle 302 is controlled depending on the periods from the times "d" to the times "e" and the potential change applied to the metering electrostrictive device 309, for thereby controlling the thickness of the ink layer 311 in the area in front of the expelling nozzle 303. In this manner, the proportion of the ink in the expelled droplet 312 is controlled. The periods from the times "d" to the times "e" and the potential change applied to the metering electrostrictive device 309 may be controlled by the print information. For example, a voltage of 10 V may be applied to the metering electrostrictive device 309 for 150 ms, and then a voltage of 10 V may be applied to the metering electrostrictive device 309 for 50 ms, as shown in Fig. 7B, for thereby printing desired information with desired intermediate gradations on a recording medium.

According to the proposed print head, only the diluent is expelled from the expelling nozzle 303 when the print information represents the color of white. Even if blank information (white) is stored in those memory addresses other than the memory addresses where the print information is stored as described above, marginal edges of the recording medium or the platen tend to be smeared by the diluent that is expelled from the expelling nozzle 303.

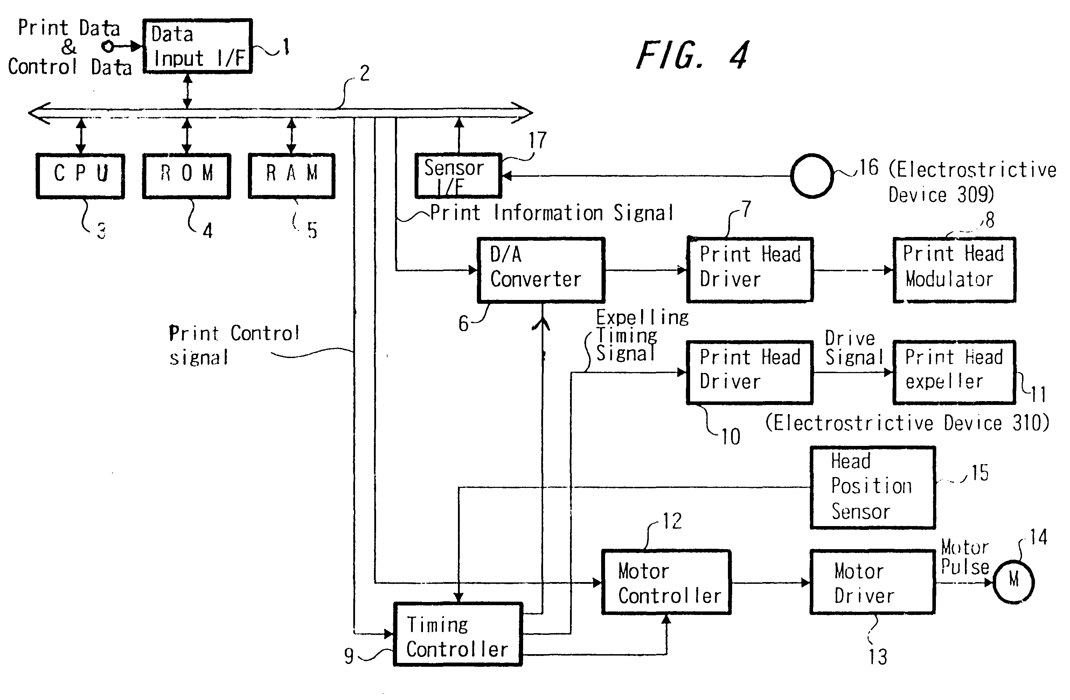

Fig. 4 shows in block form a printer apparatus according to the present invention. The printer apparatus, which will be described below with reference to Fig. 4 and the other accompanying drawings, according to the present invention has been devised in view of the drawbacks of the conventional print heads described above.

As shown in Fig. 4, print data and print control data from a host computer (not shown) are supplied to a CPU system bus 2 of the printer apparatus through a data input interface (I/F) 1 of Centronics, SCSI (parallel), RS232C, RS422 (serial), or the like type. To the CPU system bus 2, there are connected a CPU 3, a read-only memory (ROM) 4, a random-access memory (RAM) 5, and other circuits for printing the print data.

A print information signal from the system bus 2 is supplied to a digital-to-analog (D/A) converter 6, which converts the supplied print information signal into an analog signal. The analog signal is supplied to a print head driver 7 which generates a modulated signal that has been modulated with the periods from the times "d" to the times "e" and the potential changes as shown in Fig. 7B, for example. The modulated signal is applied to a print head modulator 8, which is equivalent to the metering electrostrictive device 309 shown in Fig. 6A.

A print control signal from the system bus 2 is supplied to a timing controller 9, which applies a D/A conversion trigger signal to the D/A converter 6. The timing controller 9 also generates the drive signal as shown in Fig. 7A, for example, and applies the drive signal through a print head driver 10 to a print head expeller 11, which is equivalent to the expelling electrostrictive device 310 shown in Fig. 6A.

The print head modulator 8 and the print head expeller 11 are combined in a single print head. The printer apparatus has a plurality of such print heads (described later on), and hence as many sets of the D/A converter 6, the print head driver 7, the print head modulator 8, the print head driver 10, and the print head expeller 11 as the number of print heads used.

The timing controller 9 supplies a motor drive trigger signal to a motor controller 12, which is also supplied with a motor drive control signal from the system bus 2. The motor controller 12 supplies motor drive signals through a motor driver 13 to a motor 14 as a sheet feed motor and a head feed motor.

A head position sensor 15 produces a detected position signal, which is indicative of the detected position of the print head, and supplies the detected position signal to the timing controller 9. A temperature sensor 16, which is positioned near the nozzles of the print head, generates a detected temperature signal and supplies the detected temperature signal through a sensor interface (I/F) 17 to the system bus 2. The detected temperature signal from the temperature sensor 16 is used to compensate for an error in reciprocatory scanning movement of the print head and effect a temperature control process as described in Japanese patent application No. 7-254250.

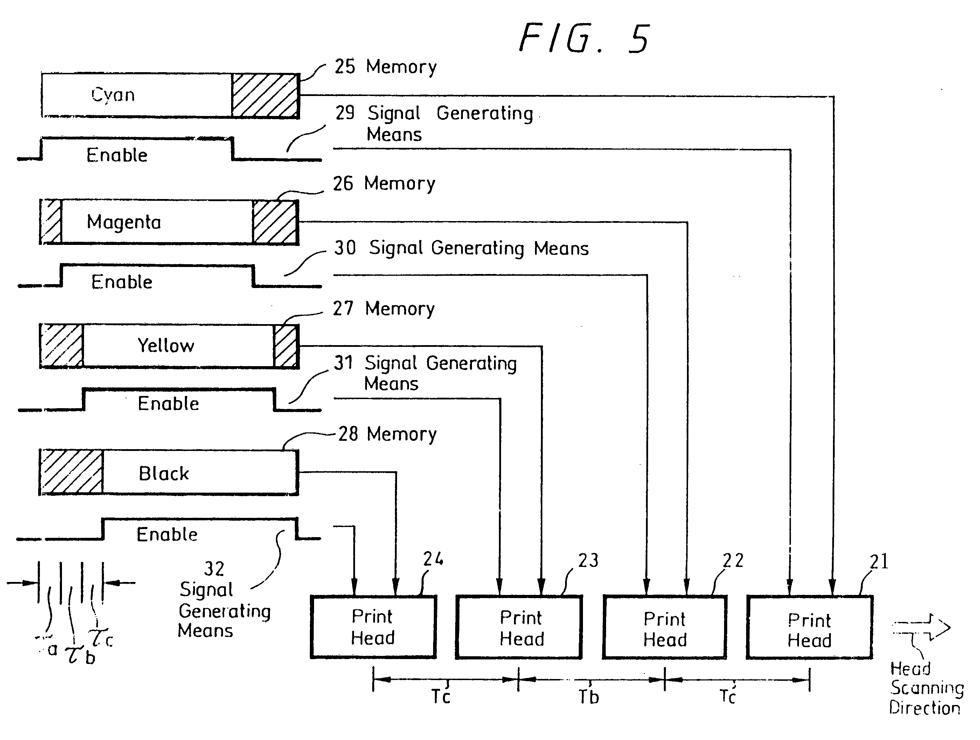

As shown in Fig. 5, the printer apparatus also has memories 25, 26, 27, 28 associated with respective print heads 21, 22, 23, 24 for printing respective items of information in respective colors of cyan, magenta, yellow, and black. The memories 25, 26, 27, 28 have addresses corresponding to periods for which all the print heads 21, 22, 23, 24 make respective scanning cycles.

Items of information to be supplied to the respective print heads 21, 22, 23, 24, i.e., items of image information in respective colors of cyan, magenta, yellow, and black, are written in the respective memories 25, 26, 27, 28 at their addresses that are shifted by intervals τa, τb, τc corresponding to time intervals at which the items of image information are supplied and which correspond to respective distances Ta, Tb, Tc by which the print heads 21, 22, 23, 24 are spaced.

The memories 25, 26, 27, 28 are associated with respective signal generating means 29, 30, 31, 32 for generating respective enable signals. Control information indicative of enable periods in which to print the respective items of print information stored in the memories 25, 26, 27, 28 is written in the signal generating means 29, 30, 31, 32.

When the memories 25, 26, 27, 28 are accessed to read the respective stored items of print information therefrom and supply them to the print heads 21, 22, 23, 24, the signal generating means 29, 30, 31, 32 are energized to supply respective enable signals to the print heads 21, 22, 23, 24. The print heads 21, 22, 23, 24 are actuated only while the supplied enable signals are of a high potential.

Therefore, in synchronism with the scanning of the print heads 21, 22, 23, 24, the memories 25, 26, 27, 28 are simultaneously accessed to read respective stored items of print information at the same addresses therein. The memories 25, 26, 27, 28 output the items of print information which have been shifted by the time intervals at which the items of image information are supplied and which correspond to the respective distances Ta, Tb, Tc. At the same time, the signal generating means 29, 30, 31, 32 output enable signals indicative of intervals in which to print the items of print information.

When the items of print information and the enable signals are supplied to the print heads 21, 22, 23, 24, the print heads 21, 22, 23, 24 print the supplied items of print information in multiple colors successively at given time intervals, and are prevented from being actuated in time intervals in which no print is to be made.

Accordingly, the print heads are actuated by enable signals that are generated by the signal generating means 29, 30, 31, 32 in response to the accessing of the memories 25, 26, 27, 28 to read the items of print information, for thereby printing the items of print information only in a required range on the recording medium.

Heretofore in conventional printers, as described above, unwanted ink may be expelled to smear the recording medium, and if a range of information to be printed is changed, then it may be necessary to store newly blank information at other memory addresses, or such a change in a range of information to be printed may not be handled in some cases. The printer apparatus according to the present invention, however, does not expel unwanted ink to smear the recording medium, and can easily allow a range of information to be printed to be changed.

The principles of the present invention may be applied to a print head for printing information of intermediate gradations with a mixture of a diluent and an ink, one of which is metered according to print information and mixed with a predetermined quantity of the other. In such an application, no diluent is expelled in a range where no print is to be made on the recording medium, thereby preventing the recording medium and the platen from being smeared, and hence a wasteful consumption of the diluent is prevented.

Furthermore, no problem arises even if print information in a previous cycle remains stored in those memory addresses corresponding to a range where no print is to be made on the recording medium. Since no blank information needs to be written in the memory addresses, the CPU does not need an additional processing time to store the blank information, and does not suffer an additional burden for storing the blank information.

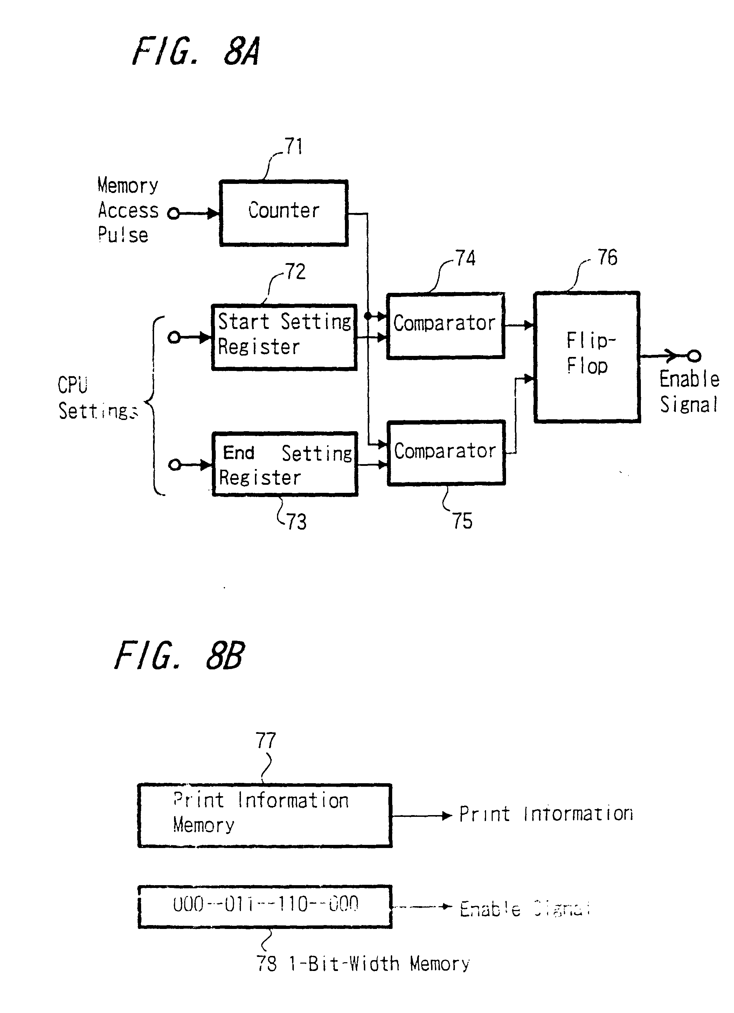

Each of the signal generating means 29, 30, 31, 32 shown in Fig. 5 may be arranged as shown in Figs. 8A and 8B.

In Fig. 8A, access pulses for accessing the memories 25, 26, 27, 28 are supplied to a counter 71, which counts an access pulse each time the memories 25, 26, 27, 28 are accessed. Settings for positions to start and end printing which are contained in the print control data supplied from the host computer are stored in registers 72, 73.

The settings stored in registers 72, 73 are compared with the count of the counter 71 by comparators 74, 75, which supply a signal to a flip-flop 76 when the compared settings agree with the count. Therefore, the flip-flop 76 outputs an enable signal which is of high potential while the addresses of the memories 25, 26, 27, 28 from the position to start printing (print start position) to the position to end printing (print end position), which have been set by the host computer, are being accessed.

In Fig. 8B, each of the signal generating means 29, 30, 31, 32 has a 1-bit-width memory 78 having the same addresses as a print information memory 77, which is equivalent to each of the memories 25, 26, 27, 28. The 1-bit-width memory 78 may be included in the RAM 5 shown in Fig. 4. Data "1" are written in those addresses of the 1-bit-width memory 78 between the print start and end positions, and data "0" are written in the other addresses of the 1-bit-width memory 78.

The memory 78 and the print information memory 77 are simultaneously accessed and read at the same addresses. The memory 78 now outputs an enable signal which is of high potential while the addresses of the print information memory 77 from the print start position to the print end position, which have been set by the host computer, are being accessed.

The signal generating means 29, 30, 31, 32 for generating an enable signal are of a simple structure, and are effective to reduce the processing time of and the burden on the CPU compared with the conventional arrangement in which blank information is written in some memory addresses.

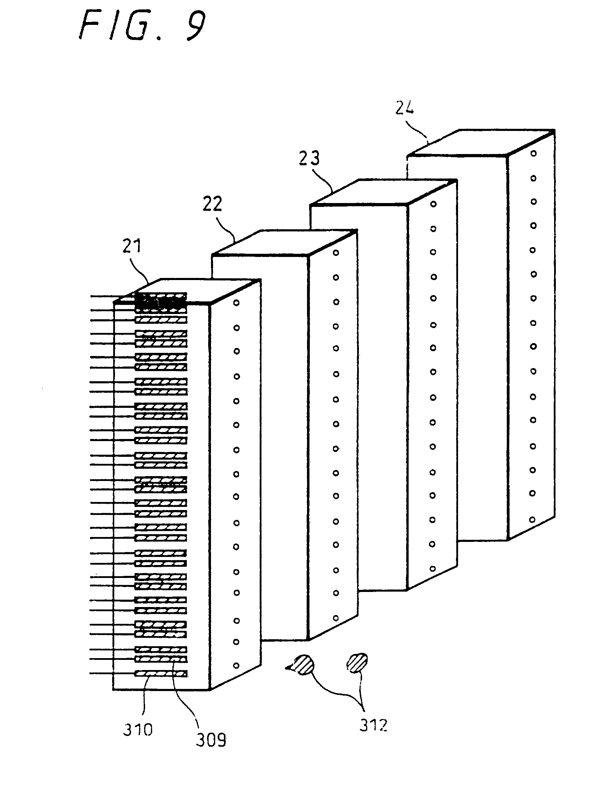

Each of the print heads 21, 22, 23, 24 has a plurality of nozzles in its casing. For example, as shown in Fig. 9, each of the print heads 21, 22, 23, 24 has sixteen nozzles each having electrostrictive devices 309, 310 for expelling droplets 312.

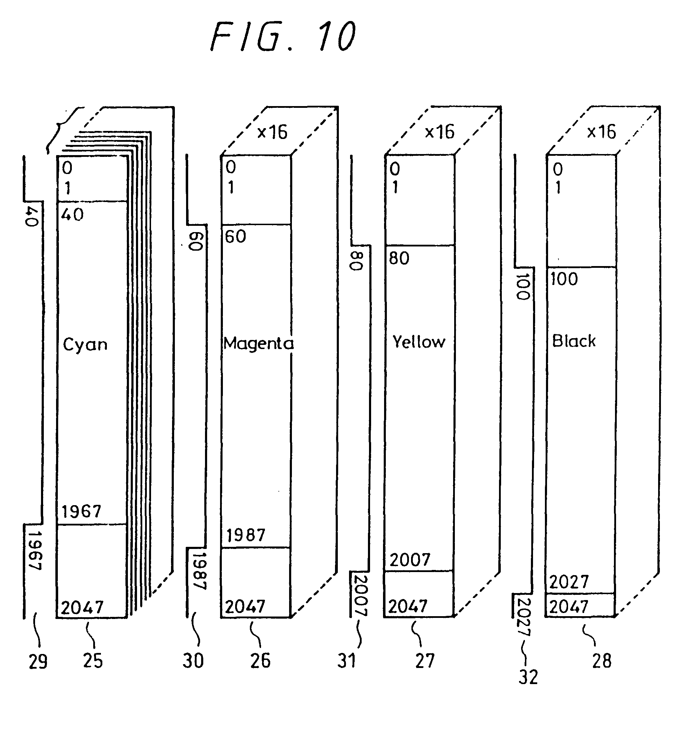

To actuate the print heads 21, 22, 23, 24 of the structure shown in Fig. 9, the print heads 21, 22, 23, 24 are associated with respective sets of memories 25, 26, 27, 28 each having addresses 0 - 2047 as shown in Fig. 10. If the print heads 21, 22, 23, 24 are spaced at intervals each equal to 20 pixels, then an item of print information is written in the memory 25 at addresses 40 - 1967, for example, therein, an item of print information is written in the memory 26 at addresses 60 - 1987, for example, therein, an item of print information is written in the memory 27 at addresses 80 - 2007, for example, therein, and an item of print information is written in the memory 28 at addresses 100 - 2027, for example, therein. The memories 25, 26, 27, 28 are associated with the respective sixteen nozzles of the print heads 21, 22, 23, 24. Therefore, sixteen memories 25 which are arranged parallel to each other are associated with the respective sixteen nozzles of the print head 21, sixteen memories 26 which are arranged parallel to each other are associated with the respective sixteen nozzles of the print head 22, sixteen memories 27 which are arranged parallel to each other are associated with the respective sixteen nozzles of the print head 23, and sixteen memories 28 which are arranged parallel to each other are associated with the respective sixteen nozzles of the print head 24.

The signal generating means 29, 30, 31, 32 are associated with the respective four sets of the memories 25, 26, 27, 28. Consequently, the processing time of and the burden on the CPU, which are required by the signal generating means 29, 30, 31, 32, are much smaller than the conventional arrangement in which blank information needs to be written in certain addresses of all the sets of the memories 25, 26, 27, 28.

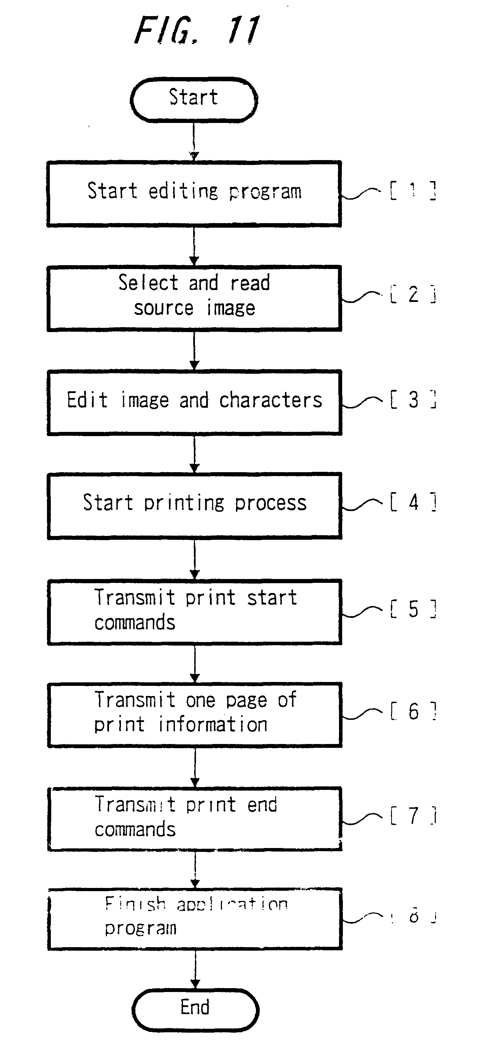

Fig. 11 shows an operation sequence of the host computer, for example, for the printer apparatus according to the present invention. When the operation sequence is started, the host computer starts an application program for reading natural images and editing characters at a step [1] under the command of the user.

In a step [2], the host computer selects and reads a desired image from an image source such as a photo CD, a scanner, or the like. In a step [3], the host computer edits the image and characters to appear at desired positions according to an editing program or the like under the command of the user. Then, the user starts a printing process at a step [4].

A printer driver program on the host computer is then started in a step [5], transmitting print start commands to the printer apparatus. The print start commands are described using a PDL (Page Description Language) inherent in the printer apparatus. The transmitted print start commands include commands with respect to a transfer data format: not compressed, a print image quality mode: a natural image mode, etc.

In a step [6], one page of print information composed of a print start position, a print end position, and image data is generated and transmitted to the printer apparatus according to the printer driver program. Thereafter, print end commands are transmitted to end the printer driver program on the host computer in a step [7]. In a next step [8], the started application program is finished. In this manner, the operation sequence of the host computer comes to an end.

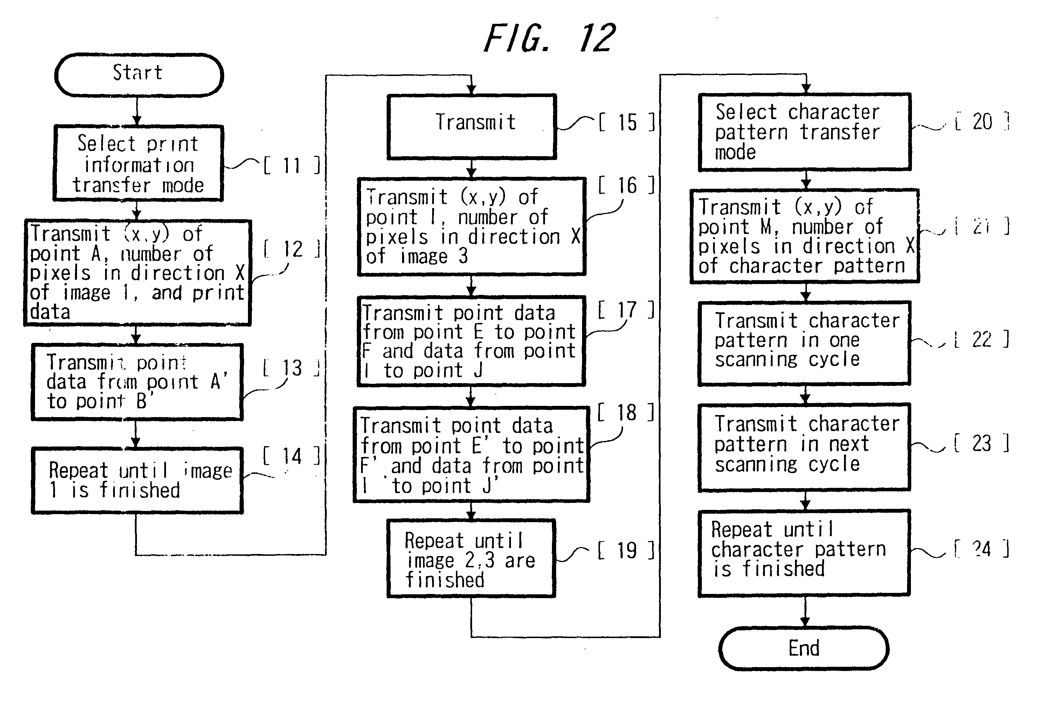

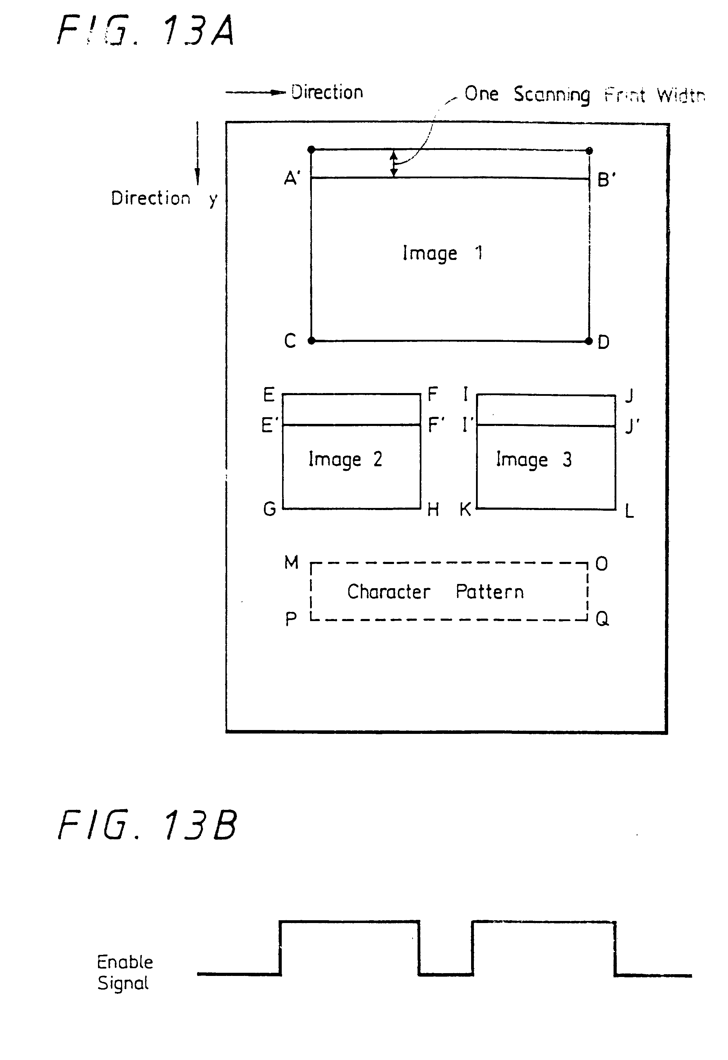

Fig. 12 shows an operation sequence for transmitting one page of print information, for example, in the step [6] described above with reference to Fig. 11. In the operation sequence shown in Fig. 12, one page of print information which comprises images 1, 2, 3 and a character pattern as shown in Fig. 13 is transmitted to the printer apparatus. When the transmission of one page of print information is started, a transfer mode for transferring full-color print information of the images 1, 2, 3 is selected in a step [11].

Thereafter, the absolute position (x, y) of a point A, the number of pixels in the direction x of the image 1, and the image data of the image 1 which are to be printed in a first scanning cycle of the print heads are transmitted to the printer apparatus in a step [12]. Then, the image data of the image 1 which are to be printed from a point A' to a point B' in a second scanning cycle of the print heads are transmitted to the printer apparatus in a step [13]. In the step [13], the absolute position (x, y) of the point A' and the number of pixels in the direction x of the image 1 do not need to be transmitted to the printer apparatus. Full-color print information can be printed in bidirectional scanning cycles of the print heads. The above transmission of the image data of the image 1 is repeated until the image 1 is finished in a step [14].

In a step [15], the absolute position (x, y) of a point E and the number of pixels in the direction x of the image 2 are transmitted to the printer apparatus. Thereafter, the absolute position (x, y) of a point I and the number of pixels in the direction x of the image 3 are transmitted to the printer apparatus in a step [16]. In a step [17], the image data of the images 2, 3 which are to be printed in a first scanning cycle of the print heads are transmitted to the printer apparatus. These image data of the images 2, 3 are alternately transmitted such that the amount of image data which is to be printed in one scanning cycle is transmitted to the printer apparatus.

In a step [18], the image data of the image 2 to be printed from a point E' to a point F in a second scanning cycle of the print heads, and the image data of the image 3 to be printed from a point I' to a point J' in the second scanning cycle of the print heads are transmitted to the printer apparatus. These image data of the images 2, 3 are alternately transmitted such that the amount of image data which is to be printed in one scanning cycle is transmitted to the printer apparatus. The above transmission of the image data of the images 2, 3 is repeated until the images 2, 3 are finished in a step [19].

In a step [20], a transfer mode for transferring print information of the character pattern is selected. Then, the absolute position (x, y) of a point M and the number of pixels in the direction x of the character pattern are transmitted to the printer apparatus in a step [21]. In a next step [22], the data of the character pattern which are to be printed in a first scanning cycle of the print heads are transmitted to the printer apparatus.

In a step [23], the data of the character pattern which are to be printed in a second scanning cycle of the print heads are transmitted to the printer apparatus. In the step [23], it is not necessary to transmit the absolute position (x, y) of a point and the number of pixels in the direction x of the character pattern to the printer apparatus. The character pattern can be printed in bidirectional scanning cycles of the print heads. The above transmission of the character pattern is repeated until the character pattern is finished in a step [24]. In this fashion, the operation sequence for transmitting one page of print information is brought to an end.

One page of print information which comprises the images 1, 2, 3 and the character pattern shown in Fig. 13A has thus been transmitted to the printer apparatus.

For transmitting the images 2, 3, the absolute position (x, y) of the point E and the number of pixels in the direction x of the image 2, and the absolute position (x, y) of the point I and the number of pixels in the direction x of the image 3 are transmitted to the printer apparatus. Therefore, as shown in Fig. 13B, the signal generating means 29, 30, 31, 32 generate two enable signals for printing the images 2, 3.

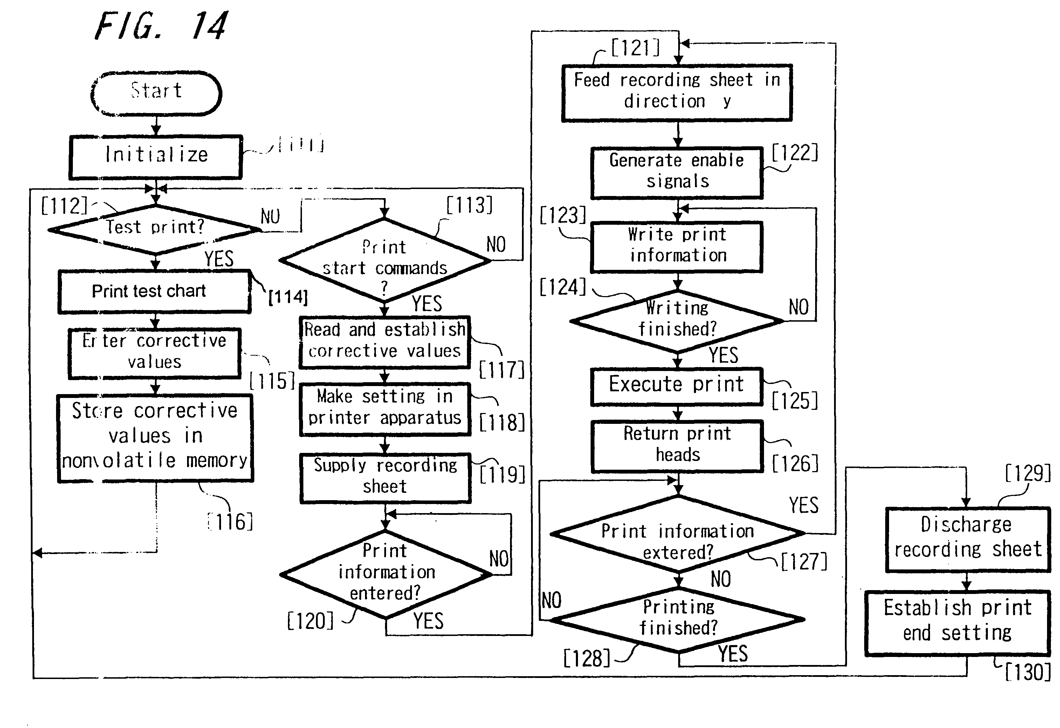

Fig. 14 shows an operation sequence of the printer apparatus to print desired information. When the printer apparatus is switched on to initiate its operation sequence, the printer apparatus is initialized in a step [111].

It is determined whether the printer apparatus is to make a test print or not in a step [112]. If not ("N" in the step [112]), then it is determined whether print start commands have been supplied from the host computer or not in a step [113]. If no print start commands have been supplied from the host computer ("N" in the step [113]), then control returns to the step [112], making the printer apparatus enter an idling mode.

If a test print is to be made ("Y" in the step [112]), then the printer apparatus prints a test chart P in a step [114]. In a step [115], the user enters evaluations of the printed test chart P, i.e., corrective values for detected positional errors of the print heads. The entered corrective values are stored in a nonvolatile memory in a step [116], after which control goes back to the step [111].

If print start commands have been supplied from the host computer ("Y" in the step [113]), then the corrective values stored in the nonvolatile memory are read and established in a correcting means (described later) for correcting the positions of the print heads in a step [117].

In a next step [118], various settings are made in the printer apparatus according to the print start commands. Then, a recording sheet (recording medium) is supplied into the printer apparatus in a step [119]. In a step [120], the printer apparatus waits ("N" in the step [120]) until print (P) information is received from the host computer.

If print information is received from the host computer ("Y" in the step [120]), then the recording sheet is fed to a print start position in the direction y in a step [121]. In a step [122], print start and end positions for the respective print heads are established in the signal generating means for generating enable signals based on a print start position of the received print information and the number of pixels in the direction x.

In a step [123], image data of the received print information are written into the memories according to the print start and end positions. Then, it is determined whether the writing of the image data has been finished or not in a step [124]. If not finished ("N" in the step [124]), then control returns to the step [123].

If the writing of the image data has been finished ("Y" in the step [124]), then the printer apparatus executes a first scanning cycle to print the print information with the print heads in a step [125]. The signal generating means generate enable signals according to the print start and end positions. For printing a plurality of images in one scanning cycle as shown in Fig. 13B, the signal generating means generate at least two enable signals.

When the first scanning cycle is finished, if it is a unidirectional scanning cycle, then the print heads are moved back to their home positions in a step [126]. It is then determined in a step [127] whether print (P) information has been received from the host computer or not. If received ("Y" in the step [127]), then control jumps back to the step [121]. If not received ("N" in the step [127]), then it is determined whether one page of print information has been printed or not in a step [128]. If not printed ("N" in the step [128]), then control goes back to the step [127].

If printed ("Y" in the step [128]), then the recording sheet is discharged from the printer apparatus in a step [129]. Then, a print end setting is established in a step [130], and control returns to the step [112], making the printer apparatus take up an idling mode. The operation sequence of the printer apparatus to print desired information is brought to an end when the printer apparatus is switched off.

Consequently, the printer apparatus prints image data and generates enable signals based on print information supplied from the host computer. The printer apparatus can print image data of good quality using the generated enable signals.

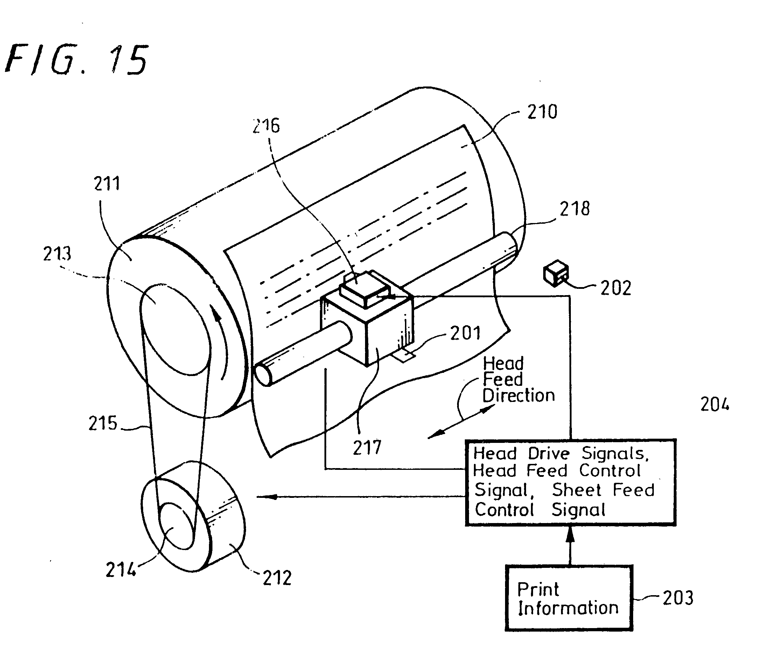

Fig. 15 shows a mechanism of the printer apparatus according to the present invention. As shown in Fig. 15, a recording sheet 210 is wound around and fed by a platen 211 which is rotated by a sheet feed motor 212 through pulleys 213, 214 and a belt 215 trained therearound.

Print heads 216 are mounted on a head feed mechanism 217 which is movably mounted on a feed screw 218 that extends parallel to the platen 211. The print heads 216 can thus be moved parallel to the platen 211 by the head feed mechanism 217. The head feed mechanism 217 has a tongue 201 which can be detected by a position sensor 202 positioned in the path of the head feed mechanism 217 to detect a scanning position of the print heads 216.

Print information 203 supplied from the host computer is supplied to the printer apparatus, which generates control signals 204 including head drive signals, a head feed control signal, and a sheet feed control signal. These control signals 204 are supplied to the print heads 216, the head feed mechanism 217, and the sheet feed motor 212 to print the print information on the recording sheet 210, feed the recording sheet 210, and move the print heads 216 to scan the recording sheet 210.

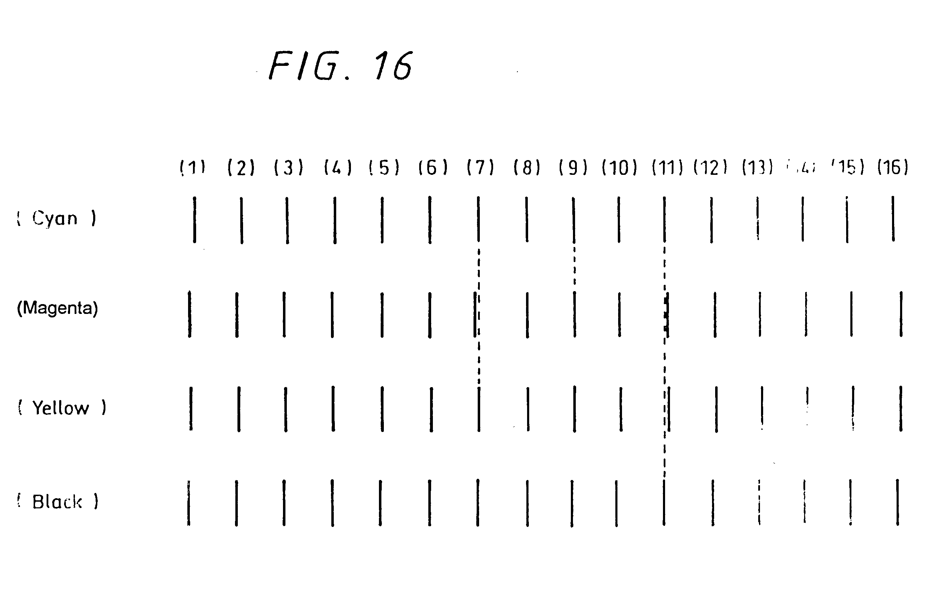

Fig. 16 shows by way of example the test chart which is used in the step [114] of the operation sequence shown in Fig. 14. As shown in Fig. 16, the test chart is marked with cyan, magenta, yellow, and black linear signals (1) - (16), and the magenta, yellow, and black signals are slightly spread outwardly from the central signals (9) with respect to the cyan signals, which are used as reference signals, by varying the timing with which droplets are expelled from the print heads.

The test chart shown in Fig. 16 is printed by the printer apparatus for a visual observation by the user. If the print heads of the printer apparatus are positioned normally, then signals are aligned with the cyan signals, e.g., the magenta signal (9) is aligned with the cyan signal (9). If the positions of the print heads suffer a mechanical error, then signals are not aligned with the cyan signal (9), but may be aligned with each other at other signal positions, e.g., the yellow signal (7) is aligned with the cyan signal (7), and the black signal (11) is aligned with the cyan signal (11), due to errors being canceled out.

When the positions of printed magenta, yellow, and black signals that are aligned with cyan signals are detected, it is possible to measure the mechanical positional errors of the print heads from the numbers of the detected positions. Therefore, the mechanical positional errors of the print heads can be compensated for using the measured values.

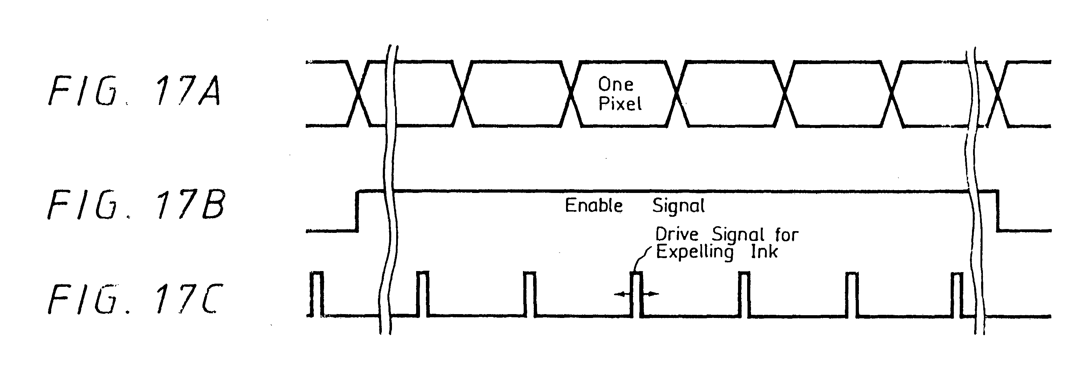

Specifically, the printer apparatus according to the present invention generates an enable signal shown in Fig. 17B with respect to pixel signals shown in Fig. 17A, and prints the print information while the enable signal is being generated. The timing of droplets expelled from the print heads is controlled by drive signals applied to the print heads to expel ink, as shown in Fig. 17C.

By shifting the drive signals as indicated by the arrows in Fig. 17C, it is possible to adjust the timing of droplets expelled from the print heads. Mechanical positional errors of the print heads can be compensated for by adjusting the timing of droplets expelled from the print heads.

Consequently, when the test chart is printed by the printer device, and the linear signals printed on the test chart are determined based on a visual observation by the user, mechanical positional errors of the print heads can be measured. Such mechanical positional errors of the print heads can be compensated for by adjusting the timing of droplets expelled from the print heads.

In this manner, mechanical positional errors of the print heads of the printer apparatus can be compensated for. While the user visually determines the linear signals printed on the test chart in the above example, the printed test chart may be read by an optical sensor to automatically detect shifts of the printed linear signals.

If mechanical positional errors of the print heads are as large as half the size of a pixel or greater, then the print information supplied to the print heads may be shifted to reduce the mechanical positional errors to less than half the size of a pixel. Thereafter, the timing of droplets expelled from the print heads may be adjusted to compensate for the mechanical positional errors of the print heads.

As described above, the printer apparatus according to the present invention has memories for storing print information corresponding to at least one scanning cycle of print heads, and signal generating means for generating enable signals indicative of enable periods of the print heads. In synchronism with the scanning of the print heads, the memories are accessed to read the stored print information, and the print heads are actuated by enable signals that are generated by the signal generating means in response to the accessing of the memories. The print heads thus actuated are prevented from smearing the recording sheet with undesirably expelled ink, and allow the range of print information to be printed on the recording sheet to be changed with ease.

The principles of the present invention may be applied to the conventional print heads shown in Figs. 1A - 1C and 2A - 2C for preventing the recording sheet from being smeared with undesirably expelled ink and allowing the range of print information to be printed on the recording sheet to be changed with ease. The principles of the present invention are also applicable to a monochromatic printer apparatus having a single print head with a single nozzle.

The principles of the present invention can further be applied to a print head for printing information of intermediate gradations with a mixture of a diluent and an ink, one of which is metered according to print information and mixed with a predetermined quantity of the other. In such an application, it has experimentally been confirmed by the inventors that the print head is capable of stably producing 64 intermediate gradations. A printer apparatus which incorporates such a print head is capable of producing 256 gradations, for example, if combined with a gradation increasing technique such as a multigradation error diffusion process.

According to the present invention, as described above, the printer apparatus has memories for storing print information and signal generating means for generating enable signals for enabling print heads. The print heads are actuated using enable signals that are generated in response to the accessing of the memories, for thereby printing print information only in a range which needs to be printed.

Heretofore in conventional printers, unwanted ink may be expelled to smear the recording sheet, and if a range of information to be printed is changed, then it may be necessary to store newly blank information in memories, or such a change in a range of information to be printed may not be handled in some cases. The printer apparatus according to the present invention, however, does not expel unwanted ink to smear the recording medium, and can easily allow a range of information to be printed to be changed.

The principles of the present invention may be applied to a print head for printing information of intermediate gradations with a mixture of a diluent and an ink, one of which is metered according to print information and mixed with a predetermined quantity of the other. In such an application, no diluent is expelled in a range where no print is to be made on the recording sheet, thereby preventing the recording sheet and the platen from being smeared, and hence a wasteful consumption of the diluent is prevented.

Furthermore, no problem arises even if print information in a previous cycle remains stored in those memory addresses corresponding to a range where no print is to be made on the recording medium. Since no blank information needs to be written in the memory addresses, the CPU does not need an additional processing time to store the blank information, and does not suffer an additional burden for storing the blank information.

Having described a preferred embodiment of the invention with reference to the accompanying drawings, it is to be understood that the invention is not limited to that precise embodiment and that various changes and modifications could be effected by one skilled in the art without departing from the present invention as defined in the appended claims.

## Claims

1. An ink jet printer apparatus comprising:
print head means including a plurality of print heads (21/22/23/24) for printing print information, said print heads (21-24) comprising means for expelling inks of different colors, respectively, to print the print information in the colors;
memory means including a plurality of memories (25/26/27/28) associated with said print heads (21-24), respectively, for storing print information corresponding to at least one scanning cycle of said print head means;
**characterized in that** it further comprises:
signal generating means including a plurality of signal generating means (29/30/31/32) associated with said print heads respectively, for generating respective enable signals indicative of an enable period of the print heads (21-24) within one scanning period of said print heads; and
control means (9) for accessing said memory means to read the stored print information from said memory means for a scanning cycle of said print head means, and actuating said print head means to print the print information in response to an enable signal generated by said signal generating means.

2. A printer apparatus according to claim 1, wherein each of said print heads (21-24) comprises a two-liquid-mixing print head for printing the information with a mixture of a diluent and an ink, one of which is metered according to the print information and mixed with a predetermined quantity of the other.

3. A printer apparatus according to claim 2, wherein each of said print heads (21-24) comprises means for printing the print information with intermediate gradations according to a multigradation error diffusion process.

4. A printer apparatus according to any previous claim, wherein said signal generating means (29/30/31/32) comprises a memory which can be accessed simultaneously with said memory means.

5. A printer apparatus according to any previous claim, wherein said signal generating means (29/30/31/32) comprises:
a counter (71) for counting access pulses supplied to access said memory means;
a register (72, 73) for storing settings for print start and end positions of the print information;
comparators (74, 75) for comparing the settings for print start and end positions of the print information with an output signal from said counter; and
means (76) for generating said enable signals based on output signals from said comparators.

6. A printer apparatus according to any previous claim, further comprising:
a memory for storing a value indicative of the position of the print information printed by said print head means; and
means for compensating for a mechanical positional error of said print head depending on the value stored in said memory.

## Patentansprüche

1. Tintenstrahl-Druckgerät, mit
einer Druckkopfvorrichtung mit mehreren Druckköpfen (21, 22, 23, 24) zum Drucken von Druckinformationen, wobei die Druckköpfe (21-24) eine Vorrichtung zum Ausstoßen von Tinten jeweils unterschiedlicher Farben aufweisen, um die Druckinformationen in den Farben zu drucken;
einer Speichervorrichtung mit mehreren Speichern (25, 26, 27, 28), die jeweils den Druckköpfen (21-24) zugeordnet sind, zum Speichern von Druckinformationen, welche wenigstens einem Abtastzyklus der Druckkopfvorrichtung entsprechen,
**dadurch gekennzeichnet,**
**dass** das Gerät weiter aufweist:
eine Signalerzeugungseinrichtung mit mehreren Signalerzeugungsvorrichtungen (29, 30, 31, 32), die jeweils den Druckköpfen zugeordnet sind, zum Erzeugen von jeweiligen Freigabesignalen, die eine Freigabeperiode der Druckköpfe (21-24) innerhalb einer Abtastperiode der Druckköpfe angeben; und
eine Steuervorrichtung (9) zum Zugreifen auf die Speichervorrichtung, um die gespeicherten Druckinformationen aus der Speichervorrichtung für einen Abtastzyklus der Druckkopfvorrichtung zu lesen, und zum Betätigen der Druckkopfvorrichtung, um die Druckinformationen als Reaktion auf ein durch die Signalerzeugungseinrichtung erzeugtes Freigabesignal zu drucken.

2. Druckgerät nach Anspruch 1,
**dadurch gekennzeichnet,**
**dass** jeder der Druckköpfe (21-24) einen Zwei-Flüssigkeiten-Misch-Druckkopf zum Drucken der Informationen mit einem Gemisch aus einem Verdünner und einer Tinte, von denen eines gemäß den Druckinformationen dosiert und mit einer vorbestimmten Menge des anderen vermischt wird, aufweist.

3. Druckgerät nach Anspruch 2,
**dadurch gekennzeichnet,**
**dass** jeder der Druckköpfe (21-24) eine Vorrichtung zum Drucken der Druckinformationen mit Zwischenabstufungen gemäß einem Mehrabstufungs-Fehlerdiffusionsprozess aufweist.

4. Druckgerät nach einem der vorhergehenden Ansprüche,
**dadurch gekennzeichnet,**
**dass** die Signalerzeugungsvorrichtung (29, 30, 31, 32) einen Speicher aufweist, auf den gleichzeitig mit der Speichervorrichtung zugegriffen werden kann.

5. Druckgerät nach einem der vorhergehenden Ansprüche,
**dadurch gekennzeichnet,**
**dass** die Signalerzeugungsvorrichtung (29, 30, 31, 32) aufweist:
einen Zähler (71) zum Zählen von zum Zugriff auf die Speichervorrichtung zugeführten Zugriffsimpulsen;
ein Register (72, 73) zum Speichern von Einstellungen für die Druckstart- und -endpositionen der Druckinformationen;
Vergleichsschaltungen (74, 75) zum Vergleichen der Einstellungen für die Druckstartund -endpositionen der Druckinformationen mit einem Ausgangssignal des Zählers; und
eine Vorrichtung (76) zum Erzeugen der Freigabesignale basierend auf den Ausgangssignalen von den Vergleichsschaltungen.

6. Druckgerät nach einem der vorhergehenden Ansprüche,
**gekennzeichnet durch**
einen Speicher zum Speichern eines Wertes, der die Position der **durch** die Druckkopfvorrichtung gedruckten Druckinformationen angibt; und
eine Vorrichtung zum Ausgleichen eines mechanischen Positionsfehlers des Druckkopfes in Abhängigkeit von dem in dem Speicher gespeicherten Wert.

## Revendications

1. Appareil d'impression à jet d'encre comprenant :
un moyen formant têtes d'impression incluant plusieurs têtes (21/22/23/24) d'impression destinées à imprimer de l'information d'impression, lesdites têtes (21 à 24) d'impression comprenant un moyen destiné à expulser des encres de différentes couleurs, respectivement, pour imprimer de l'information d'impression en couleurs ;
un moyen de mémorisation incluant plusieurs mémoires (25/26/27/28), associées respectivement auxdites têtes (21 à 24) d'impression, destiné à mémoriser de l'information d'impression correspondant à au moins un cycle de balayage dudit moyen formant têtes d'impression ;
**caractérisé en ce qu'**il comprend en outre :
un moyen générateur de signal incluant plusieurs moyens (29/30/31/32) générateurs de signal, associés respectivement auxdites têtes d'impression, destinés à engendrer des signaux respectifs d'activation représentatifs d'une période d'activation des têtes (21 à 24) d'impression à l'intérieur d'une période de balayage desdites têtes d'impression ; et
un moyen (9) de commande destiné à accéder audit moyen de mémorisation pour lire, dans ledit moyen de mémorisation, l'information d'impression mémorisée, pour un cycle de balayage dudit moyen formant têtes d'impression, et pour actionner ledit moyen formant têtes d'impression pour imprimer l'information d'impression en réponse à un signal d'activation engendré par ledit moyen générateur de signal.

2. Appareil d'impression selon la revendication 1, dans lequel chacune des têtes (21 à 24) d'impression comprend une tête d'impression à mélange de deux liquides destinée à imprimer l'information à l'aide d'un mélange d'un diluant et d'une encre, dont l'un est mesuré en fonction de l'information d'impression et mélangé avec une quantité prédéterminée de l'autre.

3. Appareil d'impression selon la revendication 2, dans lequel chacune desdites têtes (21 à 24) d'impression comprend un moyen destiné à imprimer l'information d'impression avec des gradations intermédiaires selon un procédé de diffusion d'erreurs à gradations multiples.

4. Appareil d'impression selon l'une quelconque des revendications précédentes, dans lequel ledit moyen (29/30/31/32) générateur de signal comprend une mémoire à laquelle on peut accéder en même temps qu'audit moyen de mémorisation.

5. Appareil d'impression selon l'une quelconque des revendications précédentes, dans lequel ledit moyen (29/30/31/32) générateur de signal comprend :
un compteur (71) destiné à compter des impulsions d'accès délivrées pour accéder audit moyen de mémorisation ;
un registre (72, 73) destiné à mémoriser des réglages de position de début et de fin d'impression de l'information d'impression ;
des comparateurs (74, 75) destinés à comparer, à un signal de sortie dudit compteur, les réglages des positions de début et de fin d'impression de l'information d'impression ; et
un moyen (76) destiné à engendrer lesdits signaux d'activation en se basant sur des signaux de sortie desdits comparateurs.

6. Appareil d'impression selon l'une quelconque des revendications précédentes, comprenant en outre :
une mémoire destinée à mémoriser une valeur représentative de la position de l'information d'impression imprimée par ledit moyen formant têtes d'impression ; et
un moyen destiné à compenser une erreur de position mécanique de ladite tête d'impression en fonction de la valeur mémorisée dans ladite mémoire.
